Europäisches Patentamt

European Patent Office

Office européen des brevets

(19)

(11) **EP 1 070 384 B1**

(12) **FASCICULE DE BREVET EUROPEEN**

(45) Date de publication et mention
de la délivrance du brevet:
**18.08.2004 Bulletin 2004/34**

(21) Numéro de dépôt: **99909054.1**

(22) Date de dépôt: **19.03.1999**

(51) Int Cl.⁷: **H02P 21/00**

(86) Numéro de dépôt international:
**PCT/FR1999/000648**

(87) Numéro de publication internationale:
**WO 1999/053607 (21.10.1999 Gazette 1999/42)**

(54) **PROCEDE ET DISPOSITIF DE COMMANDE D'UN CONVERTISSEUR STATIQUE ALIMENTANT UNE SOURCE DE COURANT**

REGELVERFAHREN UND VORRICHTUNG FÜR EINEN STATISCHEN, EINE SPANNUNGSQUELLE SPEISENDEN WANDLER

METHOD AND DEVICE FOR CONTROLLING A STATIC CONVERTER POWERING AN ELECTRICAL SOURCE

(84) Etats contractants désignés:
**CH DE ES FI FR GB IT LI SE**

(30) Priorité: **09.04.1998 FR 9804445**

(43) Date de publication de la demande:
**24.01.2001 Bulletin 2001/04**

(73) Titulaire: **CENTRE NATIONAL DE LA RECHERCHE SCIENTIFIQUE (CNRS) 75016 Paris (FR)**

(72) Inventeurs:
• **MEYNARD, Thierry**
**F-31500 Toulouse (FR)**
• **ROBOAM, Xavier**
**F-31770 Colomiers (FR)**
• **DE ALMEIDA MARTINS, Carlos**
**P-4200 Porto (PT)**

(74) Mandataire:
**Cabinet BARRE LAFORGUE & associés**
**95, rue des Amidonniers**
**31000 Toulouse (FR)**

(56) Documents cités:
**FR-A- 2 744 302**

• **NASH J N: "DIRECT TORQUE CONTROL, INDUCTION MOTOR VECTOR CONTROL WITHOUT AN ENCODER" IEEE TRANSACTIONS ON INDUSTRY APPLICATIONS, vol. 33, no. 2, mars 1997, pages 333-341, XP000724904**
• **CHAPUIS Y A ET AL: "COMMANDE DIRECTE DU COUPLE D'UNE MACHINE ASYNCHRONE PAR LE CONTROLEDIRECT DE SON FLUX STATORIQUE DIRECT TORQUE CONTROL" JOURNAL DE PHYSIQUE III, vol. 5, no. 6, 1 juin 1995, pages 863-880, XP000533453**

Printed by Jouve, 75001 PARIS (FR)

**Description**

L'invention vise un procédé et un dispositif de commande d'un convertisseur statique destiné à permettre d'ajuster une grandeur de contrôle électrique et/ou magnétique et/ou mécanique d'une source de courant alimentée par ce convertisseur statique.

Depuis toujours, une des principales applications des convertisseurs statiques d'énergie électrique est l'alimentation de machines électriques à fréquence variable, permettant ainsi l'obtention de bonnes performances sur des systèmes de régulation de vitesse et de position.

L'onduleur de tension triphasé est un convertisseur statique particulièrement dédié pour l'alimentation de machines à courant alternatif pour des systèmes qui demandent une bonne qualité d'entraînement (précision, linéarité, réponse transitoire, stabilité) dans une large zone de variation de vitesse et de régime de charge.

Traditionnellement, la structure d'onduleur de tension utilisée est composée par une seule cellule de commutation par phase, délivrant une tension de sortie avec un taux de distorsion harmonique dont on connaît les limites. Cet onduleur, appelé onduleur deux niveaux, se heurte toutefois à des limites technologiques liées à son principe de fonctionnement.

Une nouvelle structure d'onduleur de tension a été développée permettant une modulation de l'amplitude des impulsions. Cette structure multicellulaire, à cellules imbriquées, présente un caractère modulaire, permettant une amélioration remarquable de la qualité de la tension délivrée, qui augmente avec le nombre de cellules.

On peut considérer ces onduleurs multiniveaux série comme des convertisseurs numérique/analogique de forte puissance.

D'autre part, les processeurs numériques de signal actuels sont suffisamment rapides et précis pour qu'un contrôle direct du couple (DTC) de la machine à courant alternatif puisse être mis en oeuvre. Cette stratégie de contrôle consiste à agir directement sur l'état de l'onduleur, à partir d'informations sur les valeurs instantanées du couple et du flux de la machine.

Rapidement, cette stratégie de commande est apparue comme une innovation majeure permettant d'améliorer très sensiblement le temps de réponse de la commande du couple des machines à courant alternatif. De plus, le principe de base reste très simple puisqu'il consiste à choisir "directement" la configuration onduleur en fonction du signe de l'erreur de couple et du signe de l'erreur de flux, ce qui ne nécessite pas, en particulier, la présence d'un capteur de vitesse ou de position.

Des dispositifs actuels de commande directe du couple d'une machine asynchrone, mettant en oeuvre cette stratégie de commande sont ainsi notamment décrits dans FR 2 744 302, ou les articles NASH J N: "*Direct torque control, induction motor vector control vithout an encoder*" IEEE TRANSACTIONS ON INDUSTRY APPLICATIONS, vol. 33, n° 2, mars 1997, pages 333-341, XP000724904, et CHAPUIS Y A ET AL: "*Commande directe du couple d'une machine asynchrone par le contrôle direct de son flux statorique direct torque control*", JOURNAL DE PHYSIQUE III, vol. 5; n° 6, 1er juin 1995, pages 863-880, XP000533453.

Selon ce dernier article, notamment, un comparateur à hystérésis à double niveau effectue la comparaison entre le couple calculé et un couple de référence et entre le flux calculé et un flux de référence. La configuration de l'onduleur est déterminée en fonction du signe de l'erreur de couple et du signe de l'erreur de flux.

Cependant, les performances, exceptionnelles par certains côtés de cette stratégie, n'ont pas suffi à faire oublier les défauts liés au fonctionnement à fréquence variable qu'elle impose :

- augmentation des pertes par commutation ou par hystéresis et mise en danger des semi-conducteurs lors des fonctionnements à fréquence élevée,
- perturbations acoustiques lors des fonctionnements à fréquence basse,
- excitation des résonances mécaniques et/ou électriques à cause du balayage de la fréquence.

La présente invention vise à pallier ces inconvénients et a pour principal objectif de fournir un procédé et un dispositif de commande d'un convertisseur statique conservant la dynamique des procédés de commande directe tels que ci-dessus décrits, tout en conduisant à choisir la fréquence de commutation comme un paramètre indépendant.

A cet effet, l'invention vise en premier lieu un procédé de commande d'un convertisseur statique associé à une source de courant polyphasée et à une source de tension continue, ledit procédé étant destiné à permettre d'ajuster une grandeur électrique et/ou magnétique et/ou mécanique de la source de courant, dite grandeur de contrôle, et se caractérisant en ce que :

- on génère des instants de synchronisation t(i) définis par une horloge de période T,
- on mesure au moins une grandeur électrique, magnétique

ou mécanique, représentative de l'état de la source de courant,

- on calcule à partir des grandeurs mesurées au moins une grandeur de contrôle c(t) et sa dérivée $\dot{c}$ (t), et la valeur cp (t(i)+T) que prendrait chaque grandeur de contrôle à l'instant de synchronisation suivant t(i)+T, pour la configuration Cc du convertisseur statique à l'instant t(i),
- on compare chaque grandeur de contrôle cp (t(i)+T) à une grandeur de référence présélectionnée dite grandeur de consigne, et en fonction des résultats de la comparaison et de la configuration du convertisseur statique à chaque instant de synchronisation t(i), on détermine la configuration dudit convertisseur statique apte à permettre de minimiser l'écart entre chaque grandeur de contrôle et la grandeur de consigne correspondante à l'instant de synchronisation suivant t(i)+T,
- on calcule la dérivée à l'instant t(i)+T d'une grandeur de contrôle, dite privilégiée, correspondant à la configuration Cc (t(i)+T) à l'instant t(i)+T,
- on détermine l'instant de commutation t(i)+tcom entre ces instants t(i) et t(i)+T apte à permettre de minimiser l'écart à l'instant t(i)+T entre la grandeur de contrôle privilégiée et la grandeur de consigne correspondante,
- et on commande la commutation du convertisseur statique à l'instant t(i)+tcom.

Selon l'invention, le principe de commande se divise en trois étapes :

- choix de la configuration du convertisseur statique à un instant t(i)+T en fonction de la configuration de ce convertisseur à un instant t(i) et de grandeurs mesurées représentatives de l'état de la source de courant,
- calcul de l'instant de commutation t(i)+tcom entre les configurations présente et future, pour une grandeur de contrôle privilégiée dont on veut maîtriser la fréquence de commutation,
- commande de la commutation du convertisseur statique à l'instant t(i)+tcom.

Ce procédé de commande conduit ainsi :

- à commander une seule commutation du convertisseur statique entre deux instants d'échantillonnage t(i), t(i)+T,
- à caler, entre ces deux instants et par le biais de calculs de dérivées, l'instant de commutation de façon à minimiser l'écart entre la grandeur de contrôle privilégiée et une grandeur de consigne présélectionnée correspondante.

Un tel procédé de commande permet donc d'imposer la (ou les) grandeur(s) de contrôle délivrée(s) par la source de courant avec une grande dynamique, tout en choisissant la fréquence de commutation du convertisseur statique comme un paramètre indépendant et non plus en la subissant comme une conséquence des conditions de fonctionnement.

En fonction de l'application, on pourra alors choisir d'imposer une fréquence fixe (par exemple pour permettre un filtrage électrique ou mécanique à l'aide d'un circuit coupe-bande très sélectif) ou de faire varier la fréquence de découpage en fonction des conditions de charge (par exemple pour maintenir la température des semi-conducteurs constante et réduire le cyclage thermique).

Selon une première application destinée à la commande d'un onduleur N niveaux, avec $N \geq 2$, associé à une machine asynchrone triphasée, on sélectionne préférentiellement, comme grandeur de contrôle le flux statorique $\phi s$ et le couple électromagnétique Cem de ladite machine, et comme grandeur de contrôle privilégiée le couple électromagnétique Cem.

De plus, et de façon avantageuse, en vue du calcul des grandeurs de contrôle $\phi s$ et Cem, on mesure les courants de lignes I1, I2, I3 et les tensions statoriques, estimées ou mesurées, V1, V2, V3 en sortie de l'onduleur.

Selon cette application, en outre, on calcule préférentiellement, les dérivées $\dot{\phi} s$ et $\dot{C}$ em des grandeurs de contrôle $\phi s$ et C em, à partir des formules suivantes :

$$\dot{\phi}s = \frac{d\phi s}{dt} = \frac{2}{3\phi s}(\phi_{s\alpha}V_{s\alpha} + \phi_{s\beta}V_{s\beta} - Rs(\phi_{s\alpha}I_{s\alpha} + \phi_{s\beta}I_{s\beta}))$$

et

$$\dot{C} em = \frac{dCem}{dt} = P(V_{s\alpha}K_{s\beta} - V_{s\beta}K_{s\alpha} - k1)$$

avec :

$$K_{s\alpha} = I_{s\alpha} - \frac{\phi_{s\alpha}}{\sigma Ls}; K_{s\beta} = I_{s\beta} - \frac{\phi_{s\beta}}{\sigma Ls}$$

$$k1 = \frac{Rs'}{\sigma LsP}Cem + \frac{3\omega}{2\sigma Ls}\phi s^2 - \omega(\phi_{s\alpha}I_{s\alpha} + \phi_{s\beta}I_{s\beta})$$

$$Rs' = Rs + \frac{Ls}{Lr}Rr$$

Dans l'ensemble des formules ci-dessus :

Rs = résistance statorique
Rr = résistance rotorique
P = nombre de paires de pôles
σ = coefficient de dispersion
Ls et Lr = inductances cycliques statorique et rotorique
ω = Vitesse électrique de rotation de la machine 2.

De plus, et de façon avantageuse, on calcule :

- la variation de la dérivée du couple $\Delta \dot{C}$ em entre les configurations de l'onduleur 1 aux instant t(i) et t(i)+T selon l'équation suivante :

$$\Delta \dot{C} em = \frac{P}{\sigma Ls}((\sigma LsI_{s\beta} - \phi_{s\beta})\Delta V_{s\alpha} - (\sigma LsI_{s\alpha} - \phi_{s\alpha})\Delta V_{s\beta})$$

où $\Delta V_{s\alpha}$ et $\Delta_{s\beta}$ correspondent aux variations des tensions statoriques entres les instants t(i) et t(i)+T.

- l'instant de commutation t(i)+tcom, entre t(i) et t(i)+T, de l'onduleur selon la formule :

$$tcom = -\frac{(Cem)ref - Cem}{\Delta \dot{C} em} + T\frac{\dot{C} em + \Delta \dot{C} em}{\Delta \dot{C} em}$$

Par ailleurs, selon un mode de mise en oeuvre préférentiel visant cette première application :

- on calcule, à partir de la configuration de l'onduleur 1 à un instant t(i) correspondant à une localisation Qi de la tension de sortie dans un plan de phase αβ découpé en six secteurs angulaires θ1...θ6, les pentes des valeurs de contrôle à partir des dérivées $\dot{\phi}s$ et $\dot{C}$ em,
- on déduit de la valeur de ces pentes s'il convient d'augmenter ou de réduire ces dernières de façon à minimiser l'écart entre chaque grandeur de contrôle et la grandeur de référence correspondant à l'instant t(i)+T,
- et on détermine le point PK = Qi + 1 correspondant à la configuration de l'onduleur à l'instant t(i)+T au moyen de la table de vérité suivante :

| Signe ($\Delta \dot{C}$ em) | + | - | + | - |
|---|---|---|---|---|
| Signe ($\Delta \dot{\phi}$ s) | + | + | - | - |
| θ(1) | P2 | P6 | P3 | P5 |
| θ(2) | P3 | P1 | P4 | P6 |
| θ(3) | P4 | P2 | P5 | P1 |
| θ(4) | P5 | P3 | P6 | P2 |
| θ(5) | P6 | P4 | P1 | P3 |
| θ(6) | P1 | P5 | P2 | P4 |

Selon une deuxième application à la commande d'un interrupteur (k), tel que notamment un transistor, associé à une charge RL tel que notamment un hacheur à deux niveaux, et à chaque instant d'échantillonnage t(i) :

- on calcule les dérivées de la grandeur I à commander aux instants t(i) et t(i)+T fonction de l'état de l'interrupteur (k) à l'instant t(i) selon les formules suivantes :

. si l'interrupteur (k) est passant à l'instant t(i) :

$$\dot{I}\,(t(i)) = \frac{E - V}{L} \text{ et } \dot{I}\,(t(i)+T) = -\frac{V}{L}$$

. si l'interrupteur (k) est bloqué à l'instant t(i) :

$$\dot{I}\,(t(i)) = \frac{-V}{L} \text{ et } \dot{I}\,(t(i)+T) = -\frac{E - V}{L}$$

- et on détermine l'instant t(i)+tcom de commutation entre t(i) et t(i)+T de changement d'état de l'interrupteur (k) selon les formules :

. si l'interrupteur (k) est passant à l'instant t(i) :

$$tcom = \frac{Iref - I(t(i))}{E/L} + T\,\frac{V}{E}$$

. si l'interrupteur (k) est bloqué à l'instant t(i) :

$$tcom = -\frac{Iref - I(t(i))}{E/L} + T\,\frac{E - V}{E}$$

L'invention s'étend à un dispositif de commande comprenant :

- une horloge de période T apte à générer des temps de synchronisation t(i),
- un module de calcul apte à calculer à chaque instant t(i) :

. à partir d'au moins une grandeur mesurée représentative de l'état de la source de courant au moins une grandeur de contrôle c(t) et sa dérivée $\dot{c}$ (t),
. à partir de chaque grandeur de contrôle c(t) et de sa dérivée $\dot{c}$ (t), et par comparaison avec une grandeur de référence présélectionnée, de déterminer la configuration du convertisseur statique apte à conduire à une minimisation de l'écart à l'instant t(i)+T entre chaque grandeur de contrôle et la grandeur de référence correspondante,
. la variation de la dérivée d'une des grandeurs de contrôle, dite privilégiée, entre les configurations du convertisseur statique respectivement aux instants t(i) et t(i)+T,

- une unité de calcul de l'instant de commutation t(i)+tcom entre t(i) et t(i)+T apte à permettre de minimiser l'écart à l'instant t(i)+T entre la valeur de contrôle privilégiée et la valeur de référence associée,
- et une unité de commande de la commutation du convertisseur statique à l'instant t(i)+tcom.

D'autres caractéristiques, buts et avantages de l'invention ressortiront de la description détaillée qui suit en référence aux dessins annexés qui représentent à titre d'exemple non limitatif un dispositif conforme à l'invention d'application générale, et deux types d'applications préférentielles du processus selon l'invention. Sur ces dessins qui font partie intégrante de la présente invention :

- la figure 1 est un schéma synoptique général d'un dispositif conforme à l'invention appliqué à la commande d'une source de courant,
- les figures 2a à 2e sont des graphiques illustrant le principe de contrôle utilisé selon le procédé de l'invention,
- la figure 3 est un schéma électrique représentant un hacheur à deux niveaux, débitant sur charge (R,L),
- la figure 4 est un graphique représentant la réponse du courant obtenu en sortie du hacheur selon le procédé de commande conforme à l'invention,
- la figure 5 est un schéma synoptique d'un dispositif conforme à l'invention appliqué à la commande d'une machine asynchrone triphasée,
- la figure 6 est une représentation des secteurs angulaires de repérage de la position du flux de cette machine asynchrone,

- les figures 7a et 7b sont des représentations des vecteurs de tension atteignables respectivement par un onduleur triphasé à deux niveaux et un onduleur triphasé à trois niveaux,
- la figure 8 est un tableau de sélection pour la génération des signaux de commande,
- la figure 9 est un schéma illustrant la stratégie de choix nécessaire à l'utilisation du tableau de sélection de la figure 8,
- et la figure 10 est un graphique représentant un exemple de trajectoire du vecteur de tension au cours d'un régime transitoire.

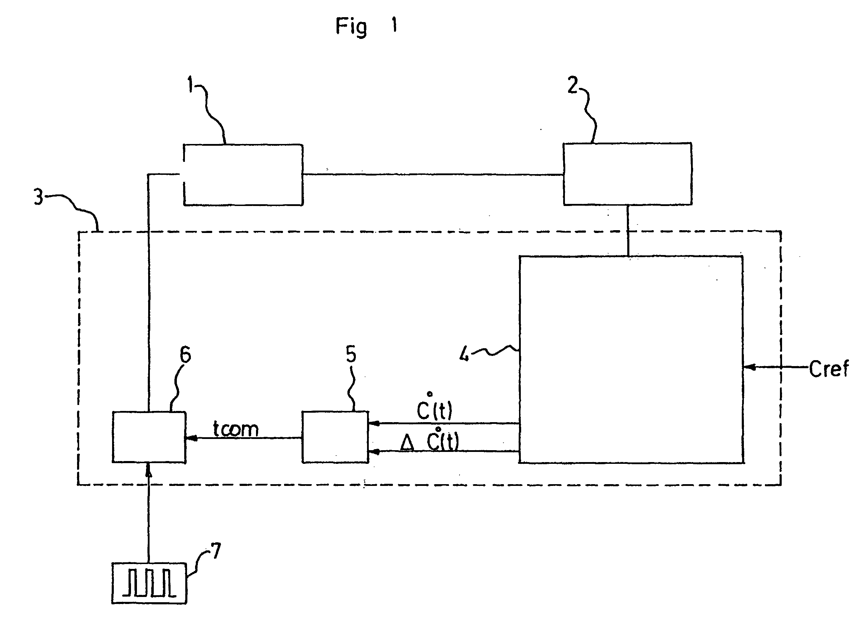

Le dispositif selon l'invention dont le synoptique est représenté de façon générale à la figure 1 est conçu pour permettre d'ajuster une grandeur de contrôle d'une source de courant 2 alimentée par un convertisseur statique 1, le tout avec une grande dynamique et en imposant la fréquence de commutation dudit convertisseur statique.

A cet effet, ce dispositif comprend une unité de commande 3 comportant, en premier lieu, un module de calcul 4 programmé pour :

- calculer à partir d'au moins une grandeur mesurée représentative de l'état de la source de courant 2 :

    . une valeur de contrôle c(t) et sa dérivée c (t) à l'instant d'échantillonnage t(i),

    . la pente $\dot{c}$ (t(i)+T) de cette valeur de contrôle c(t) à l'instant t(i)+T permettant de minimiser l'écart entre cette dernière et une valeur de référence cref prédéterminée,

- délivrer deux signaux représentatifs chacun des valeurs de

$$\dot{c} \text{ (t(i)) et } \Delta \dot{c} \text{ (t(i)) } = \dot{c} \text{ (t(i)+T) - } \dot{c} \text{ (t(i)).}$$

Cette unité de commande 3 comporte, en outre, une unité de calcul 5 de l'instant t(i)+tcom entre t(i) et t(i)+T apte à permettre d'obtenir ou d'approcher la valeur de référence cref à l'instant t(i)+T.

Cette unité de commande 3 comprend enfin un bloc de commande 6 adapté pour imposer la nouvelle configuration suivante du convertisseur statique 1 à l'instant t(i)+tcom, asservi à un générateur d'impulsions 7 déterminant la fréquence de fonctionnement.

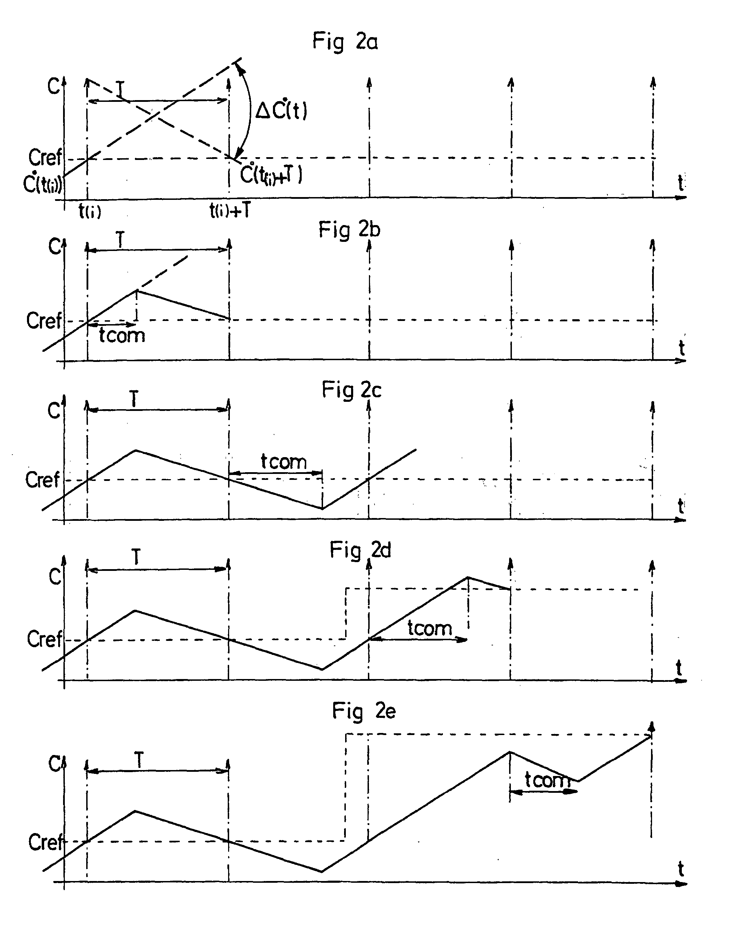

Le principe de fonctionnement de ce dispositif est illustré aux figures 2a à 2e, et consiste donc à diviser le temps en périodes de découpage égales de durée T, et à procéder à au plus une commutation du convertisseur statique 1 pendant chaque période.

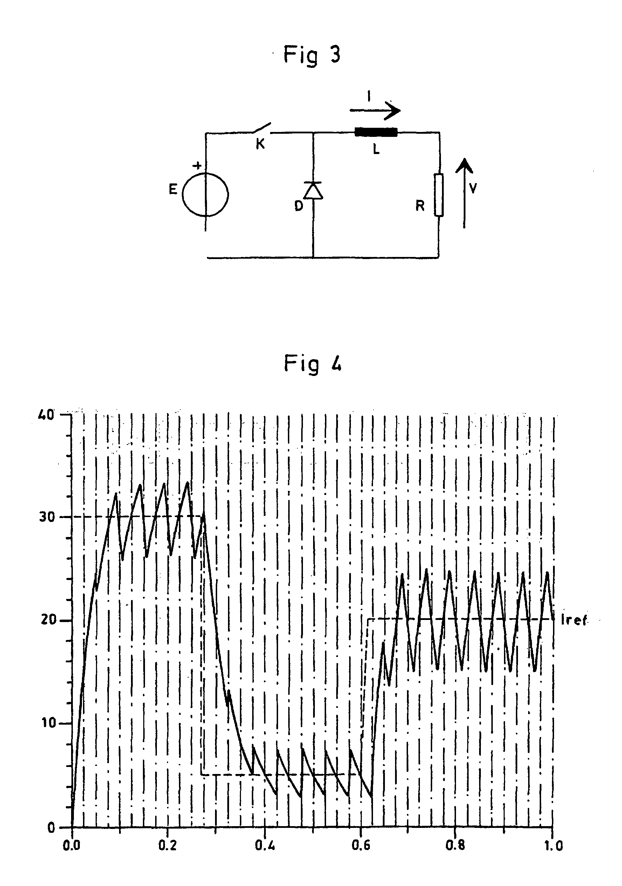

Un tel dispositif peut, à titre d'exemple et en premier lieu, être appliqué à la commande du courant de sortie d'un hacheur standard tel que représenté à la figure 3.

A cet effet, selon le principe tel que décrit ci-dessus, on impose un courant de sortie égal à un courant de référence à chaque instant d'échantillonnage, avec en outre une seule commutation du hacheur entre deux instants d'échantillonnage.

A chaque instant d'échantillonnage t(i), on calcule donc l'instant t(i)+tcom où aura lieu la commutation suivante afin d'obtenir à l'instant t(i)+T, un courant égal au courant de référence. Ceci conduit à écrire :

$$I(t(i)) + \dot{I} \text{ (t(i)) . tcom + } \dot{I} \text{ (t(i)+T) . (T-tcom) = Iref}$$

ce qui donne :

$$\text{tcom} = \frac{\text{Iref - I(t(i))}}{\dot{I}(t(i)) - \dot{I}(ti) + T)} - T \frac{\dot{I}(t(i) + T)}{\dot{I}(t(i)) - \dot{I}(t(i) + T)}$$

Ce mode de commande impose donc de calculer les dérivées de la grandeur à commander, et de distinguer deux cas :

1°) si le transistor K est passant à l'instant d'échantillonnage :

$$\dot{I} \text{ (t(i)) } = \frac{E - V}{L} \text{ et } \dot{I} \text{ (t(i)+T) } = -\frac{V}{L}$$

et par conséquent, on le bloquera à :

$$tcom = \frac{Iref - I(t(i))}{E/L} + T\ \frac{V}{E}$$

2°) si le transistor est bloqué à l'instant d'échantillonnage :

$$\dot{i}\ (t(i)) = \frac{-V}{L} \text{ et } \dot{i}\ (t(i)+T) = \frac{E - V}{L}$$

et par conséquent, on l'amorcera à :

$$tcom = -\ \frac{Iref - I(t(i))}{E/L} + T\ \frac{E - V}{E}$$

Le résultat de cette commande est illustré à la figure 4 représentant le courant de sortie du hacheur qui pour une valeur Iref donnée oscille autour de cette valeur et en régime permanent devient égale à cette dernière à chaque instant d'échantillonnage.

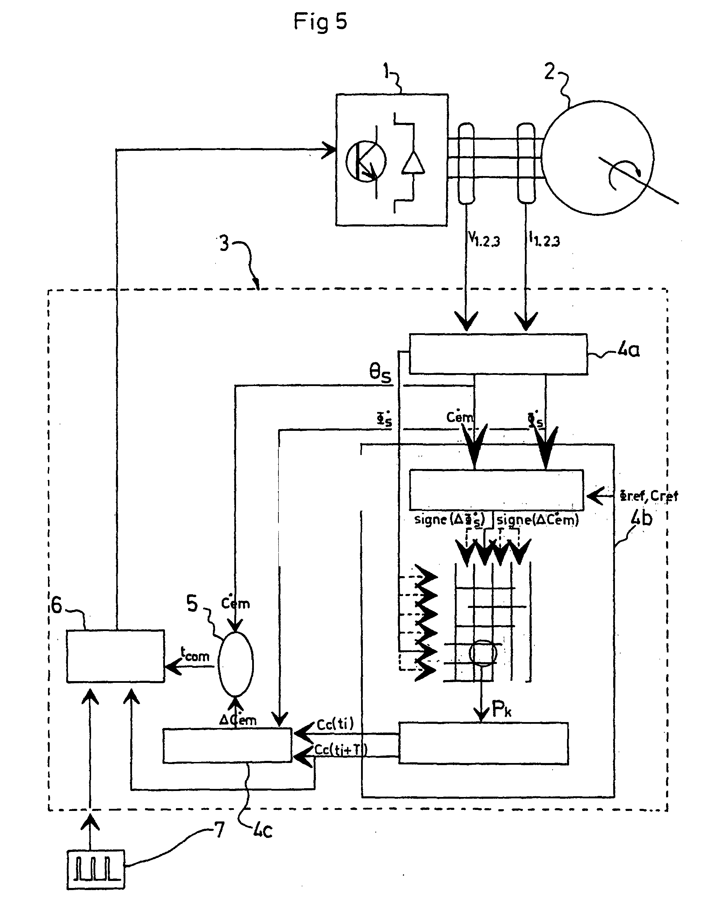

Le dispositif selon l'invention représenté à la figure 5 est quant à lui adapté pour commander directement le couple d'une machine asynchrone 2 alimentée par un convertisseur statique 1. Ce dispositif permet d'imposer le couple délivré par la machine 2 avec une grande dynamique, tout en imposant la fréquence de commutation du convertisseur statique 1.

Selon cette application, le module de calcul 4 de l'unité de commande 3 comporte principalement :

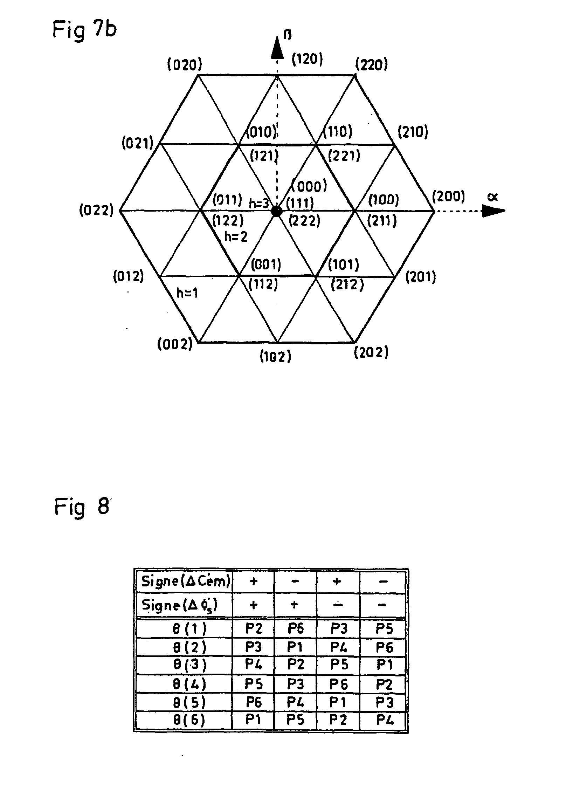

- un module 4a d'estimation des grandeurs à contrôler, couple et flux, et de leurs dérivées,
- un bloc de calcul 4b associé à une table représentée à la figure 8 permettant de choisir la configuration suivante du convertisseur 1,
- un module 4c de prédiction de la variation de la dérivée du couple $\Delta\ \dot{C}$ em entre les configurations actuelle et suivante.

Cette unité de commande 3 comprend en outre :

- le bloc 5 de calcul de l'instant t(i)+tcom de passage d'une configuration onduleur Cc(t(i)) à la configuration suivante Cc(t(i)+T),
- et le bloc 6 conçu pour imposer la configuration onduleur Cc(t(i)+T) à l'instant t(i)+tcom suivant le top d'horloge courant délivré par le générateur d'impulsion 7.

Selon ce dispositif de commande, le principe de contrôle se divise en trois étapes principales :

- détermination par lé bloc de calcul 4a de la configuration onduleur Cc(t(i)+T) future à partir de la configuration actuelle Cc(t(i)) et des mesures prélevées,
- calcul par le bloc 5 de l'instant de commutation t(i)+tcom entre les configurations actuelle et future pour une grandeur de contrôle privilégiée dont on veut maîtriser la fréquence de commutation, en l'occurrence le couple Cem de la machine 2,
- imposition par le bloc 6 de la nouvelle configuration Cc(t(i)+T) à l'instant voulu.

Chacune de ces étapes est décrite ci-dessous de façon détaillée par analyse des fonctions de chaque module et bloc 4a-4c, 5, 6.

Le premier module 4a est conçu, à partir des mesures des courants de lignes I1, I2, I3 et des tensions statoriques, estimées ou mesurées V1, V2, V3 en sortie de l'onduleur 1, pour reconstituer par le modèle de la machine asynchrone 2, les grandeurs de contrôle, c'est-à-dire le couple électromagnétique Cem et le flux statorique $\phi$s, ainsi que leurs dérivées.

Ces valeurs du flux et du couple sont obtenues de façon classique en se plaçant dans un repère fixe $\alpha\ \beta$ lié au stator de la machine 2, et en calculant $I_{s\alpha}$, $I_{s\beta}$, $V_{s\alpha}$ et $V_{s\beta}$ en faisant des transformations triphasé/diphasé à puissance constante sur les axes $\alpha\beta$.

Le calcul du flux statorique peut par exemple être ainsi obtenu en utilisant les équations statoriques de la machine 2 au moyen des équations suivantes :

$$\phi_{s\alpha} = \int_{o}^{t} (V_{s\alpha} - RsI_{s\alpha})dt$$

$$\phi_{s\beta} = \int_{o}^{t} (V_{s\beta} - RsI_{s\beta})dt$$

Le couple électromagnétique de la machine 2 est quant à lui calculé à partir de valeurs $\phi_{s\alpha}$ et $\phi_{s\beta}$ et des mesures des courants en ligne, en utilisant l'équation suivante :

$$Cem = P(\phi_{s\alpha} I_{s\beta} - \phi_{s\beta} I_{s\alpha})$$

A partir de ces équations, les valeurs des dérivées du flux et du couple sont obtenues par les formules suivantes :

$$\dot{\phi}s = \frac{d\phi s}{dt} = \frac{2}{3\phi s}(\phi_{s\alpha}V_{s\alpha} + \phi_{s\beta}V_{s\beta} - Rs(\phi_{s\alpha}I_{s\alpha} + \phi_{s\beta}I_{s\beta}))$$

et

$$\dot{C}em = \frac{dCem}{dt} = P(V_{s\alpha}K_{s\beta} - V_{s\beta}K_{s\alpha} - k1)$$

avec :

$$K_{s\alpha} = I_{s\alpha} - \frac{\phi_{s\alpha}}{\sigma Ls}; K_{s\beta} = I_{s\beta} - \frac{\phi_{s\beta}}{\sigma Ls}$$

$$k1 = \frac{Rs'}{\sigma LsP}Cem + \frac{3\omega}{2\sigma Ls}\phi s^2 - \omega(\phi_{s\alpha}I_{s\alpha} + \phi_{s\beta}I_{s\beta})$$

$$Rs' = Rs + \frac{Ls}{Lr}Rr$$

Dans l'ensemble des formules ci-dessus :

Rs = résistance statorique
Rr = résistance rotorique
P = nombre de paires de pôles
$\sigma$ = coefficient de dispersion
Ls et Lr = inductances cycliques statorique et rotorique
$\omega$ = Vitesse électrique de rotation de la machine 2.

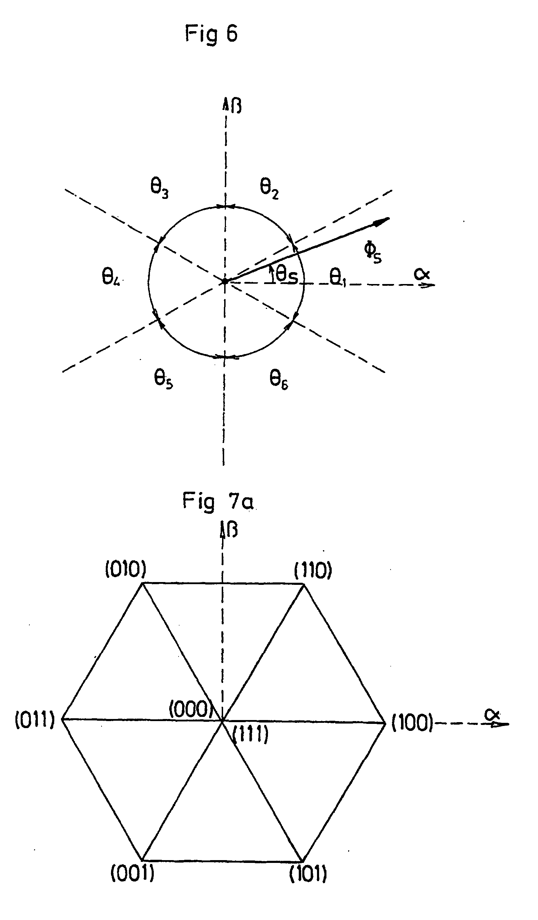

Le contrôle de ces grandeurs est réalisé par la technique classique du Contrôle Direct du couple ("DTC") qui dépend directement de la position du flux statorique dans le plan de phase $\alpha\beta$. Tel qu'illustré à la figure 6, ce plan $\alpha\beta$ est découpé en six secteurs angulaires $\theta1....\theta6$. Selon cette découpe, les grandeurs de contrôle ont un sens d'évolution constant à l'intérieur d'un secteur angulaire donné, pour une configuration onduleur choisie, et les vecteurs de tension atteignables par des onduleurs à deux et à trois niveaux sont représentés à titre d'exemples aux figures 7a et 7b.

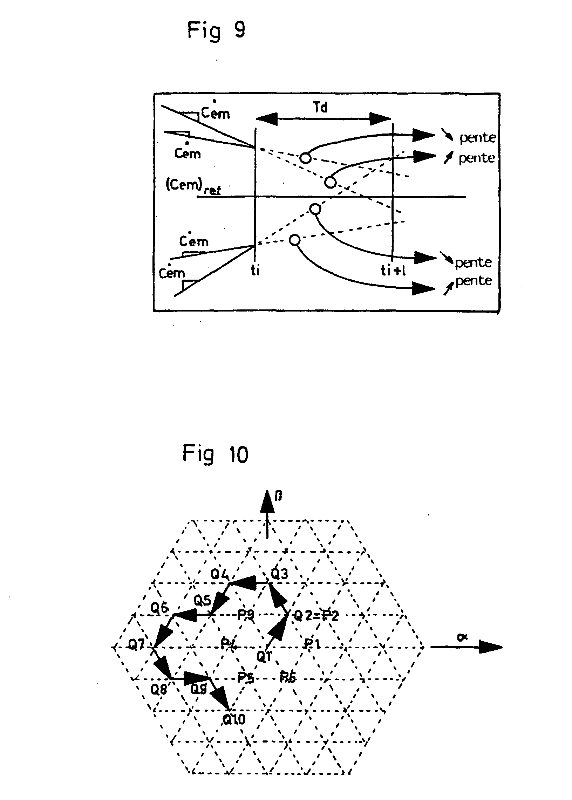

Toutefois, la configuration de l'onduleur 1 correspond aux ordres logiques imposés à chaque interrupteur, et ledit onduleur peut avoir un nombre quelconque de cellules de commutation en série (p = N - 1). Les vecteurs tension de sortie peuvent donc ainsi atteindre un ensemble de points inscrits à l'intérieur d'un hexagone représenté dans le plan de phase, tel qu'illustré à la figure 10, qui représente la trajectoire du vecteur tension au cours d'un régime transitoire.

Le bloc de calcul 4b est quant à lui adapté pour calculer, à partir des valeurs des grandeurs de contrôle à un instant (t(i)), les valeurs de ces grandeurs de contrôle à l'instant d'échantillonnage (t(i)+T).

A cet effet, et en premier lieu, ce bloc de calcul 4b est adapté, à partir de la configuration de l'onduleur 1 à un instant t(i) correspondant à une localisation Qi de la tension de sortie dans le plan de phase, pour calculer les pentes des valeurs de contrôle à partir de valeurs $\dot\phi$s et $\dot C$ em délivrées par le module 4a.

La valeur de ces pentes permet de prédire si la configuration à l'instant t(i) mène les grandeurs de contrôle en dessous ou en dessus des valeurs de référence. Sachant que l'objectif est d'obtenir une erreur nulle entre grandeurs de contrôle et grandeurs de référence à l'instant t(i)+T, le bloc de calcul 4b est alors adapté pour définir s'il convient d'augmenter (+) ou de diminuer (-) ces pentes.

Cette sélection consistant à choisir d'augmenter ou de diminuer la pente du couple est illustrée sur la figure 9 sur laquelle sont représentées les valeurs du couple de référence (Cem)ref et de diverses pentes $\dot C$ em à l'instant t(i).

A partir de cette détermination et de la connaissance du secteur angulaire θ (k) où se trouve le flux, délivré par le module 4a, le bloc de calcul 4b est conçu au moyen d'une table de vérité représentée à la figure 8 pour déterminer le point Qi + 1 = PK correspondant à la configuration de l'onduleur à l'instant t(i)+T. Tel que représenté à la figure 10, ce point Qi + 1 est un des six points de l'hexagone périphérique à Qi.

Le module 4c est quant à lui adapté pour calculer la variation de la dérivée du couple $\Delta \dot C$ em entre les configurations de l'onduleur 1 aux instant t(i) et t(i)+T. Ce calcul est effectué au moyen de l'équation suivante :

$$\Delta \dot C\, em = \frac{P}{\sigma Ls}((\sigma Ls I_{s\beta} - \phi_{s\beta})\Delta V_{s\alpha} - (\sigma Ls I_{s\alpha} - \phi_{s\alpha})\Delta V_{s\beta})$$

$\Delta V_{s\alpha}$ et $\Delta V_{s\beta}$ correspondent aux variations des tensions statoriques d'une configuration de l'onduleur à l'instant t(i) à celle à l'instant t(i)+T.

Enfin, le calcul de l'instant de commutation t(i)+tcom de l'onduleur, réalisé au niveau du bloc 5 est basé sur l'équation suivante :

$$tcom = -\frac{(Cem)ref - Cem}{\Delta \dot C\, em} + T\frac{\dot C\, em + \Delta \dot C\, em}{\Delta \dot C\, em}$$

La stratégie de commande décrite ci-dessus a donc pour objectif principal d'imposer la fréquence de commutation en la choisissant comme un paramètre indépendant et non plus en la subissant comme une conséquence des conditions de fonctionnement.

A cet effet, on divise le temps en périodes de découpage égales et de durée T, et tel que représenté à la figure 10, on s'assure que pendant chaque période T, il y ait un seul déplacement d'un point atteignable par l'onduleur 1 à un autre point voisin.

Pour cela, en considérant à un instant de découpage que le vecteur correspondant au point Qi a été choisi à la période précédente, deux questions sont à résoudre :

1°) choisir le point PK parmi les six points autour de Qi (P1 à P6) pour lequel il faut commuter et qui constituera à la période de découpage suivante le point coïncidant avec le point central (Qi + 1),

2°) déterminer l'instant t(i)+tcom dans l'intervalle [t(i), t(i)+T] auquel doit se faire la transition de Qi vers Qi + 1 = PK.

Pour résoudre la première question, on utilise le tableau de la figure 8, qui nous donne pour chaque secteur θ, le point PK capable de fournir les signes de :

$$\Delta \dot C\, em = \dot C\, em(t(i)+T) - \dot C\, em(t(i)) \text{ et de } \Delta \dot\phi s = \dot\phi s(t(i)+T) - \dot\phi s(t(i)).$$

Rappelons que la stratégie de choix du signe ($\Delta \dot C$ em) et de même pour le signe ($\Delta\dot\phi s$) nécessaire à l'utilisation du tableau de la figure 8 est représentée à la figure 9.

Pour résoudre la deuxième question, on calcule l'instant de commutation t(i)+tcom permettant d'obtenir une erreur nulle du couple par rapport à une valeur de couple de référence Cemref à chaque instant de découpage.

Ainsi, l'algorithme correspondant à cette loi de commande à fréquence fixe peut se présenter sous la forme suivante. A chaque instant t(i), faire :

1) calcul de $\dot C$ em $= \frac{dCem}{dt}$,

2) choix du point PK par utilisation du tableau de la figure 8,

3) calcul de $\Delta\dot{C}$ em correspondant au passage Qi vers PK,

4) calcul de l'instant de commutation t(i)+tcom.

**Revendications**

1. Procédé de commande d'un convertisseur statique (1) associé à une source de courant polyphasée (2) et à une source de tension continue, ledit procédé étant destiné à permettre d'ajuster une grandeur électrique et/ou magnétique et/ou mécanique de la source de courant (2), dite grandeur de contrôle, et **se caractérisant en ce que** :

   - on génère des instants de synchronisation t(i) définis par une horloge de période T,
   - on mesure au moins une grandeur électrique, magnétique

   ou mécanique, représentative de l'état de la source de courant,

   - on calcule à partir des grandeurs mesurées au moins une grandeur de contrôle c(t) et sa dérivée c (t), et la valeur cp (t(i)+T) que prendrait chaque grandeur de contrôle à l'instant de synchronisation suivant t(i)+T, pour la configuration Cc du convertisseur statique à l'instant t(i),
   - on compare chaque grandeur de contrôle cp (t(i)+T) à une grandeur de référence présélectionnée dite grandeur de consigne, et en fonction des résultats de la comparaison et de la configuration du convertisseur statique à chaque instant de synchronisation t(i), on détermine la configuration dudit convertisseur statique apte à permettre de minimiser l'écart entre chaque grandeur de contrôle et la grandeur de consigne correspondante à l'instant de synchronisation suivant t(i)+T,
   - on calcule la dérivée à l'instant t(i)+T d'une grandeur de contrôle, dite privilégiée, correspondant à la configuration Cc(t(i)+T) à l'instant t(i)+T,
   - on détermine l'instant de commutation t(i)+tcom entre ces instants t(i) et t(i)+T apte à permettre de minimiser l'écart à l'instant t(i)+T entre la grandeur de contrôle privilégiée et la grandeur de consigne correspondante.
   - et on commande la commutation du convertisseur statique à l'instant t(i)+tcom.

2. Procédé selon la revendication 1 de commande d'un onduleur (1) N niveaux, avec N$\geq$2, associé à une machine asynchrone triphasée (2), **caractérisé en ce que** l'on sélectionne comme grandeur de contrôle, le flux statorique $\phi$s et le couple électromagnétique Cem de ladite machine, et comme grandeur de contrôle privilégiée le couple électromagnétique Cem.

3. Procédé selon la revendication 2, **caractérisé en ce qu'**en vue du calcul des grandeurs de contrôle $\phi$s et Cem, on mesure les courants de ligne I1, I2, I3 et les tensions statoriques, estimées ou mesurées, V1, V2, V3 en sortie de l'onduleur (1).

4. Procédé selon l'une des revendications 2 ou 3, **caractérisé en ce que** l'on calcule les dérivées $\dot{\phi}$s et $\dot{C}$ em des grandeurs de contrôle $\phi$s et Cem à partir des formules suivantes :

$$\dot{\phi}s = \frac{d\phi s}{dt} = \frac{2}{3\phi s}(\phi_{s\alpha}V_{s\alpha} + \phi_{s\beta}V_{s\beta} - Rs(\phi_{s\alpha}I_{s\alpha} + \phi_{s\beta}I_{s\beta}))$$

et

$$\dot{C} \, em = \frac{dCem}{dt} = P(V_{s\alpha}K_{s\beta} - V_{s\beta}K_{s\alpha} - k1)$$

avec :

$$K_{s\alpha} = I_{s\alpha} - \frac{\phi_{s\alpha}}{\sigma Ls}; K_{s\beta} = I_{s\beta} - \frac{\phi_{s\beta}}{\sigma Ls}$$

$$k1 = \frac{Rs'}{\sigma LsP}Cem + \frac{3\omega}{2\sigma Ls}\phi s^2 - \omega(\phi_{s\alpha}I_{s\alpha} + \phi_{s\beta}I_{s\beta})$$

$$Rs'=Rs+\frac{Ls}{Lr}Rr$$

Dans l'ensemble des formules ci-dessus :

Rs = résistance statorique
Rr = résistance rotorique
P = nombre de paires de pôles
$\sigma$ = coefficient de dispersion
Ls et Lr = inductances cycliques statorique et rotorique
$\omega$ = Vitesse électrique de rotation de la machine 2.

**5.** Procédé selon la revendication 4, **caractérisé en ce que** l'on calcule :

- la variation de la dérivée du couple $\Delta \dot{C}$ em entre les configurations de l'onduleur (1) aux instants t(i) et t(i)+T selon l'équation suivante :

$$\Delta \dot{C} \text{ em} = \frac{P}{\sigma Ls}((\sigma Ls I_{s\beta} - \phi_{s\beta})\Delta V_{s\alpha} - (\sigma Ls I_{s\alpha} - \phi_{s\alpha})\Delta V_{s\beta})$$

où $\Delta V_{s\alpha}$ et $\Delta V_{s\beta}$ correspondent aux variations des tensions statoriques entre les instants t(i) et t(i)+T,

- l'instant de commutation t(i)+tcom, entre t(i) et t(i)+T, de l'onduleur (1) selon la formule :

$$\text{tcom} = -\frac{(Cem)ref - Cem}{\Delta \dot{C} \text{ em}} + T \frac{\dot{C} \text{ em} + \Delta \dot{C} \text{ em}}{\Delta \dot{C} \text{ em}}$$

**6.** Procédé selon l'une des revendications 4 ou 5, **caractérisé en ce que** :

- on calcule, à partir de la configuration de l'onduleur (1) à un instant t(i) correspondant à une localisation Qi de la tension de sortie dans un plan de phase $\alpha\beta$ découpé en six secteurs angulaires $\theta 1...\theta 6$, les pentes des valeurs de contrôle à partir des dérivées $\dot{\phi}s$ et $\dot{C}$ em,
- on déduit de la valeur de ces pentes s'il convient d'augmenter ou de réduire ces dernières de façon à minimiser l'écart entre chaque grandeur de contrôle et la grandeur de référence correspondant à l'instant t(i)+T,
- et on détermine le point PK = Qi + 1 correspondant à la configuration de l'onduleur (1) à l'instant t(i)+T au moyen de la table de vérité suivante :

| Signe ($\Delta \dot{C}$ em) | + | - | + | - |
|---|---|---|---|---|
| Signe ($\Delta \dot{\phi}s$) | + | + | - | - |
| $\theta(1)$ | P2 | P6 | P3 | P5 |
| $\theta(2)$ | P3 | P1 | P4 | P6 |
| $\theta(3)$ | P4 | P2 | P5 | P1 |
| $\theta(4)$ | P5 | P3 | P6 | P2 |
| $\theta(5)$ | P6 | P4 | P1 | P3 |
| $\theta(6)$ | P1 | P5 | P2 | P4 |

**7.** Procédé selon la revendication 1 de commande d'un interrupteur (k) tel que notamment un transistor, associé à une charge RL tel que notamment un hacheur à deux niveaux, **caractérisé en ce qu'**à chaque instant d'échantillonnage t(i) :

- on calcule les dérivées de la grandeur I à commander aux instants t(i) et t(i)+T fonction de l'état de l'interrupteur (k) à l'instant t(i) selon les formules suivantes :

. si l'interrupteur (k) est passant à l'instant t(i) :

$$\dot{i}\,(t(i)) = \frac{E - V}{L} \text{ et } \dot{i}\,(t(i)+T) = -\frac{V}{L}$$

. si l'interrupteur (k) est bloqué à l'instant t(i) :

$$\dot{i}\,(t(i)) = \frac{-V}{L} \text{ et } \dot{i}\,(t(i)+T) = \frac{E - V}{L}$$

- et on détermine l'instant t(i)+tcom de commutation entre t(i) et t(i)+T de changement d'état de l'interrupteur (k) selon les formules :

  . si l'interrupteur (k) est passant à l'instant t(i) :

$$tcom = \frac{Iref - I(t(i))}{E/L} + T\,\frac{V}{E}$$

  . si l'interrupteur (k) est bloqué à l'instant t (i)

$$tcom = -\frac{Iref - I(t(i))}{E/L} + T\,\frac{E - V}{E}$$

**8.** Dispositif de commande d'un convertisseur statique (1) associé à une source de courant polyphasée (2) et à une source de tension continue, ledit dispositif étant destiné à permettre d'ajuster une grandeur électrique et/ou magnétique et/ou mécanique de la source de courant (2), dite grandeur de contrôle, et **se caractérisant en ce qu'**il comprend :

- une horloge (7) de période T apte à générer des temps de synchronisation t(i),
- un module de calcul (4) apte à calculer à chaque instant t(i) :

  . à partir d'au moins une grandeur mesurée représentative de l'état de la source de courant (2) au moins une grandeur de contrôle c(t) et sa dérivée ċ(t),
  . à partir de chaque grandeur de contrôle c(t) et de sa dérivée ċ (t), et par comparaison avec une grandeur de référence présélectionnée, de déterminer la configuration du convertisseur statique (1) apte à conduire à une minimisation de l'écart entre chaque grandeur de contrôle et la grandeur de référence correspondante à l'instant t(i)+T,
  . la variation de la dérivée d'une des grandeurs de contrôle, dite privilégiée, entre les configurations du convertisseur statique respectivement aux instants t(i) et t(i)+T,

- une unité de calcul (5) de l'instant de commutation t(i)+tcom entre t(i) et t(i)+T apte à permettre de minimiser l'écart à l'instant t(i)+T entre la valeur de contrôle privilégiée et la valeur de référence associée,
- et une unité (6) de commande de la commutation du convertisseur statique à l'instant t(i)+tcom.

**9.** Dispositif selon la revendication 8 de commande d'un onduleur (1) N niveaux, avec N≥2, associé à une machine asynchrone triphasée (2), **caractérisé en ce que** le module de calcul (4) comporte :

- un module (4a) d'estimation de grandeurs à contrôler, couple Cem et flux $\phi$s, et de leurs dérivées Ċem et $\dot{\phi}$s,

- un bloc de calcul (4b) de détermination de la configuration de l'onduleur (1) à un instant t(i)+T en fonction de sa configuration à l'instant t(i), associé à une table de vérité,

- et un module (4c) de prédiction de la variation de la dérivée du couple $\Delta$ Ċem entre les configurations aux instants t(i) et t(i)+T.

**10.** Dispositif selon la revendication 9, **caractérisé en ce que** la table de vérité associée au bloc de calcul (4b) est la suivante :

| Signe ($\Delta \dot{C}$ em) | + | - | + | - |
|---|---|---|---|---|
| Signe ($\Delta \dot{\phi}$s) | + | + | - | - |
| $\theta(1)$ | P2 | P6 | P3 | P5 |
| $\theta(2)$ | P3 | P1 | P4 | P6 |
| $\theta(3)$ | P4 | P2 | P5 | P1 |
| $\theta(4)$ | P5 | P3 | P6 | P2 |
| $\theta(5)$ | P6 | P4 | P1 | P3 |
| $\theta(6)$ | P1 | P5 | P2 | P4 |

**Patentansprüche**

1. Verfahren zum Steuern eines statischen Wandlers (1) in Verbindung mit einer mehrphasigen Stromquelle (2) und einer Gleichspannungsquelle, wobei das Verfahren dazu gedacht ist, eine elektrische und/oder magnetische und/ oder mechanische Größe, Regelgröße genannt, der Stromquelle (2) einzustellen, und **dadurch gekennzeichnet ist, dass**:

   - Synchronisationszeitpunkte t(i) erzeugt werden, die durch einen Taktgeber mit Periode T definiert werden,

   - wenigstens eine elektrische, magnetische oder mechanische Größe gemessen wird, die den Zustand der Stromquelle repräsentiert,

   - auf der Basis der gemessenen Größen wenigstens eine Regelgröße c(t) und deren Ableitung $\dot{c}$ (t) und der Wert cp (t(i)+T) berechnet werden, den jede Regelgröße zum Synchronisationszeitpunkt gemäß t(i)+T annehmen wird, für die Konfiguration Cc des statischen Wandlers zum Zeitpunkt t(i),

   - jede Regelgröße cp (t(i)+T) mit einer vorgewählten Referenzgröße, Einstellgröße genannt, verglichen wird, und in Abhängigkeit von den Ergebnissen des Vergleichs und der Konfiguration des statischen Wandlers zu jedem Synchronisationszeitpunkt t(i) die Konfiguration des genannten statischen Wandlers bestimmt wird, um es zu ermöglichen, den Abstand zwischen jeder Regelgröße und der entsprechenden Einstellgröße zum Synchronisationszeitpunkt gemäß t(i)+T zu minimieren,

   - die Ableitung zum Zeitpunkt t(i)+T einer Regelgröße, übergeordnete Größe genannt, entsprechend der Konfiguration Cc(t(i)+T) zum Zeitpunkt t(i)+T berechnet wird,

   - der Kommutationszeitpunkt t(i)+tcom zwischen diesen Zeitpunkten t(i) und t(i)+T bestimmt wird, zu dem der Abstand zum Zeitpunkt t(i)+T zwischen der übergeordneten Regelgröße und der entsprechenden Einstellgröße minimiert werden kann,

   - und die Kommutation des statischen Wandlers zum Zeitpunkt t(i)+tcom gesteuert wird.

2. Verfahren nach Anspruch 1 zum Steuern eines Wechselrichters (1) mit N Pegeln, wobei N≥2 ist, in Verbindung mit einer asynchronen Drehstrommaschine (2), **dadurch gekennzeichnet, dass** als Regelgröße der Ständerfluss $\phi$s und das elektromagnetische Moment Cem der genannten Maschine und als übergeordnete Regelgröße das elektromagnetische Moment Cem gewählt werden.

3. Verfahren nach Anspruch 2, **dadurch gekennzeichnet, dass** zum Berechnen der Regelgrößen $\phi$s und Cem die Leitungsströme I1, I2, I3 und die Ständerspannungen, geschätzt oder gemessen, V1, V2, V3 am Ausgang des Wechselrichters (1) gemessen werden.

4. Verfahren nach Anspruch 2 oder 3, **dadurch gekennzeichnet, dass** die Ableitungen $\dot{\phi}$s und $\dot{C}$ em von Regelgrößen $\phi$s und Cem auf der Basis der folgenden Formeln berechnet werden:

$$\dot{\phi}s = \frac{d\phi s}{dt} = \frac{2}{3\phi s}(\phi_{s\alpha}V_{s\alpha} + \phi_{s\beta}V_{s\beta} - Rs(\phi_{s\alpha}I_{s\alpha} + \phi_{s\beta}I_{s\beta}))$$

und

$$\dot{C}\,em = \frac{dCem}{dt} = P(V_{s\alpha}K_{s\beta} - V_{s\beta}K_{s\alpha} - k1)$$

wobei:

$$K_{s\alpha} = I_{s\alpha} - \frac{\phi_{s\alpha}}{\sigma Ls}; K_{s\beta} = I_{s\beta} - \frac{\phi_{s\beta}}{\sigma Ls}$$

$$k1 = \frac{Rs'}{\sigma LsP}Cem + \frac{3\omega}{2\sigma Ls}\phi s^2 - \omega(\phi_{s\alpha}I_{s\alpha} + \phi_{s\beta}I_{s\beta})$$

$$Rs' = Rs + \frac{Ls}{Lr}Rr$$

wobei in den Formeln Folgendes gilt:

Rs = Ständerwiderstand
Rr = Läuferwiderstand
P = Anzahl Polpaare
σ = Streufaktor
Ls und Lr = zyklische Ständer- und
Läuferinduktanzen
ω = elektrische Drehzahl der Maschine 2.

**5.** Verfahren nach Anspruch 4, **dadurch gekennzeichnet, dass** Folgendes berechnet wird:

- die Variation der Ableitung des Momentes $\Delta\,\dot{C}\,em$ zwischen den Konfigurationen des Wechselrichters (1) zu den Zeitpunkten t(i) und t(i)+T gemäß der folgenden Gleichung:

$$\Delta\,\dot{C}\,em = \frac{P}{\sigma Ls}((\sigma LsI_{s\beta} - \phi_{s\beta})\Delta V_{s\alpha} - (\sigma LsI_{s\alpha} - \phi_{s\alpha})\Delta V_{s\beta})$$

wobei $\Delta V_{s\alpha}$ und $\Delta V_{s\beta}$ Variationen der Ständerspannungen zwischen den Zeitpunkten t(i) und t(i)+T entsprechen,

- der Kommutationszeitpunkt t(i)+tcom zwischen t(i) und t(i)+T des Wechselrichters (1) gemäß der folgenden Formel:

$$tcom = -\frac{(Cem)ref - Cem}{\Delta\,\dot{C}\,em} + T\frac{\dot{C}\,em + \Delta\,\dot{C}\,em}{\Delta\,\dot{C}\,em}$$

**6.** Verfahren nach Anspruch 4 oder 5, **dadurch gekennzeichnet, dass**:

- auf der Basis der Konfiguration des Wechselrichters (1) zum Zeitpunkt t(i), der einer Lokalisierung Qi der Ausgangsspannung in einer Phasenebene $\alpha\beta$ entspricht, die in sechs Winkelsektoren $\theta1 ... \theta6$ unterteilt ist, die Gefälle der Regelwerte auf der Basis der Ableitungen $\dot{\phi}s$ und $\dot{C}\,em$ berechnet werden,
- von dem Wert dieser Gefälle je nach dem, ob sie erhöht oder reduziert werden sollen, auf eine solche Weise abgeleitet wird, dass der Abstand zwischen jeder Regelgröße und der entsprechenden Referenzgröße zum Zeitpunkt t(i)+T minimiert wird,
- der Punkt PK = Qi + 1, der der Konfiguration des Wechselrichters (1) zum Zeitpunkt t(i)+T entspricht, mit Hilfe der folgenden Wahrheitstabelle ermittelt wird:

| Vorzeichen ($\Delta \dot{C}$ em) | + | - | + | - |
|---|---|---|---|---|
| Vorzeichen ($\Delta \dot{\phi}$s) | + | + | - | - |
| $\theta(1)$ | P2 | P6 | P3 | P5 |
| $\theta(2)$ | P3 | P1 | P4 | P6 |
| $\theta(3)$ | P4 | P2 | P5 | P1 |
| $\theta(4)$ | P5 | P3 | P6 | P2 |
| $\theta(5)$ | P6 | P4 | P1 | P3 |
| $\theta(6)$ | P1 | P5 | P2 | P4 |

**7.** Verfahren nach Anspruch 1 zum Steuern eines Unterbrechers (k) wie z.B. eines Transistors, in Verbindung mit einer Ladung RL wie z.B. einem Zwei-Pegel-Zerhacker, **dadurch gekennzeichnet, dass** zu jedem Abtastzeitpunkt t(i):

- die Ableitungen der zu regelnden Größe I zu den Zeitpunkten t(i) und t(i)+T in Abhängigkeit vom Zustand des Unterbrechers (k) zum Zeitpunkt t(i) gemäß den folgenden Formeln berechnet werden:

  . wenn der Unterbrecher (k) zum Zeitpunkt t(i) leitet:

$$\dot{i}(t(i)) = \frac{E - V}{L} \text{ und } \dot{i}(t(i) + T) = -\frac{V}{L}$$

  . wenn der Unterbrecher (k) zum Zeitpunkt t(i) sperrt:

$$\dot{i}(t(i)) = \frac{-V}{L} \text{ und } \dot{i}(t(i) + T) = \frac{E - V}{L}$$

- und der Kommutationszeitpunkt t(i)+tcom zwischen t(i) und t(i)+T der Zustandsänderung des Unterbrechers (k) gemäß den folgenden Formeln ermittelt wird:

  . wenn der Unterbrecher (k) zum Zeitpunkt t(i) leitet:

$$tcom = \frac{Iref - I(t(i))}{E/L} + T \frac{V}{E}$$

  . wenn der Unterbrecher (k) zum Zeitpunkt t(i) sperrt:

$$tcom = - \frac{Iref - I(t(i))}{E/L} + T \frac{E - V}{E}$$

**8.** Vorrichtung zum Steuern eines statischen Wandlers (1) in Verbindung mit einer mehrphasigen Stromquelle (2) und einer Gleichspannungsquelle, wobei die genannte Vorrichtung dazu gedacht ist, eine elektrische und/oder magnetische und/oder mechanische Größe der Stromquelle (2) einzustellen, Regelgröße genannt, und die **dadurch gekennzeichnet ist, dass** sie Folgendes umfasst:

- einen Taktgeber (7) mit Periode T zum Erzeugen von Synchronisationszeiten t(i),

- ein Rechenmodul (4) zum Berechnen zu jedem Zeitpunkt t(i):

  . auf der Basis von wenigstens einer gemessenen Größe, die für den Zustand der Stromquelle (2) repräsentativ ist, wenigstens einer Regelgröße c(t) und ihrer Ableitung $\dot{c}$(t),

  . auf der Basis jeder Regelgröße c(t) und ihrer Ableitung $\dot{c}$(t) und durch Vergleichen mit einer vorgewählten Referenzgröße, Ermitteln der Konfiguration des statischen Wandlers (1), um eine Minimierung des Abstands zwischen jeder Regelgröße und der entsprechenden Referenzgröße zum Zeitpunkt t(i)+T zu erzielen,

- die Variation der Ableitung von einer der Regelgrößen, übergeordnet genannt, zwischen den Konfigurationen des jeweiligen statischen Wandlers zu den Zeitpunkten t(i) und t(i)+T,

- eine Recheneinheit (5) des Kommutationszeitpunkts t(i)+tcom zwischen t(i) und t(i)+T, damit der Abstand zum Zeitpunkt t(i)+T zwischen dem übergeordneten Regelwert und dem assoziierten Referenzwert minimiert werden kann,

- und eine Einheit (6) zum Steuern der Kommutation des statischen Wandlers zum Zeitpunkt t (i)+tcom.

9. Vorrichtung nach Anspruch 8 zum Steuern eines Wechselrichters (1) mit N Pegeln, wobei N≥2 ist, in Verbindung mit einer asynchronen Drehstrommaschine (2), **dadurch gekennzeichnet, dass** das Rechenmodul (4) Folgendes umfasst:

- ein Modul (4a) zum Schätzen von zu regelnden Größen, das Moment Cem und den Fluss $\phi s$ und deren Ableitungen $\dot{C}$ em und $\dot{\phi}s$,

- einen Rechenblock (4b) zum Ermitteln der Konfiguration des Wechselrichters (1) zu einem Zeitpunkt t(i)+T in Abhängigkeit von seiner Konfiguration zum Zeitpunkt t(i) in Verbindung mit einer Wahrheitstabelle,

- und ein Modul (4c) zum Vorhersagen der Variation der Ableitung des Momentes $\Delta \dot{C}$ em zwischen den Konfigurationen zu den Zeitpunkten t(i) und t(i)+T.

10. Vorrichtung nach Anspruch 9, **dadurch gekennzeichnet, dass** die Wahrheitstabelle in Verbindung mit dem Rechenblock (4b) wie folgt lautet:

| Vorzeichen ($\Delta \dot{C}$ em) | + | - | + | - |
|---|---|---|---|---|
| Vorzeichen ($\Delta \dot{\phi}$ s) | + | + | - | - |
| θ(1) | P2 | P6 | P3 | P5 |
| θ(2) | P3 | P1 | P4 | P6 |
| θ(3) | P4 | P2 | P5 | P1 |
| θ(4) | P5 | P3 | P6 | P2 |
| θ(5) | P6 | P4 | P1 | P3 |
| θ(6) | P1 | P5 | P2 | P4 |

**Claims**

1. Method for controlling a static converter (1) associated with a polyphase current source (2) and a direct voltage source, the said method being designed to make it possible to adjust an electrical and/or magnetic and/or mechanical value of the current source (2), a so-called control value, **characterized in that**,

- synchronization instants t(i) are generated, defined by a periodic clock T,

- at least one electrical, magnetic or mechanical value is measured, representative of the state of the current source,

- at least one control value c(t) and its derivative $\dot{c}(t)$ are calculated from the measured values, and the value cp(t(i)+T) which each control value would have at the following synchronization instant t(i)+T, for the configuration Cc of the static converter at the instant t(i),

- each control value cp(t(i)+T) is compared with a preselected reference value, a so-called set value and, as a function of the result from the comparison and the configuration of the static converter at each synchronization instant t(i), the configuration of the said static converter is determined which is able to minimize the difference between the control value and the corresponding set value at the following synchronization instant t(i)+T,

- the derivative at the instant t(i)+T is calculated of a control value, a so-called preferred value, corresponding to the configuration Cc(t(i)+T) at the instant t(i)+T,

- the switching instant t(i)+tcom is determined between these instants t(i) and t(i)+T making it possible to minimize the difference at the instant t(i)+T between the preferred control value and the corresponding set value,

- and switching of the static converter is controlled at the instant t(i)+tcom.

2. Method as claimed in claim 1, for controlling an N-level inverter (1), with $N \geq 2$, associated with a triphase asynchronous machine (2), **characterized in that** the stator flux $\phi s$ and the electromagnetic torque Cem of the said machine are preferentially selected as the control value, and the electromagnetic torque Cem as the preferred control value.

3. Method as claimed in claim 2, **characterized in that**, with a view to calculating the control values $\phi s$ and Cem, measurements are taken of the line currents I1, I2, I3 and the estimated or measured stator voltages V1, V2, V3 at the output from the inverter (1).

4. Method as claimed in either of claims 2 or 3, **characterized in that** the derivatives $\dot{\phi} s$ and $\dot{C}$ em of the control values $\phi s$ and Cem are calculated from the following formulae :

$$\dot{\phi} s = \frac{d\phi s}{dt} = \frac{2}{3\phi s}(\phi_{s\alpha} V_{s\alpha} + \phi_{s\beta} V_{s\beta} - Rs(\phi_{s\alpha} I_{s\alpha} + \phi_{s\beta} I_{s\beta}))$$

and

$$\dot{C} em = \frac{dCem}{dt} = P(V_{s\alpha} K_{s\beta} - V_{s\beta} K_{s\alpha} - k1)$$

with:

$$K_{s\alpha} = I_{s\alpha} - \frac{\phi_{s\alpha}}{\sigma Ls}; K_{s\beta} = I_{s\beta} - \frac{\phi_{s\beta}}{\sigma Ls}$$

$$k1 = \frac{Rs'}{\sigma LsP}Cem + \frac{3\omega}{2\sigma Ls}\phi s^2 - \omega(\phi_{s\alpha} I_{s\alpha} + \phi_{s\beta} I_{s\beta})$$

$$Rs' = Rs + \frac{Ls}{Lr}Rr$$

In all the above formulae :

Rs = the stator resistance
Rr = the rotor resistance
P = the number of pairs of poles
$\sigma$ = dispersion coefficient
Ls and Lr = the cyclic stator and rotor inductances
$\omega$ = the electrical rate of rotation of the machine 2.

5. Method as claimed in claim 4, **characterized in that** a computation is made :

- of the variation of the derivative of the torque $\Delta \dot{C}$ em between the configurations of the inverter (1) at the instants t(i) and t(i)+T according to the following equation:

$$\Delta \dot{C} em = \frac{P}{\sigma Ls}((\sigma Ls I_{s\beta} - \phi_{s\beta})\Delta V_{s\alpha} - (\sigma Ls I_{s\alpha} - \phi_{s\alpha})\Delta V_{s\beta})$$

where $\Delta v_{s\alpha}$ and $\Delta v_{s\beta}$ correspond to variations in the stator voltages between the instants t(i) and t(i)+T,

- the switching instant t(i)+tcom between t(i) and t(i)+T, of the inverter (1) according to the formula :

$$tcom = - \frac{(Cem)ref - Cem}{\Delta \dot{C} em} + T \frac{\dot{C} em + \Delta \dot{C} em}{\Delta \dot{C} em}$$

6. Method as claimed in either of claims 4 or 5, **characterized in that**:

- a computation is made, from the configuration of the inverter (1) at an instant t(i) corresponding to a localization Qi of the output voltage in a phase plane $\alpha\beta$ divided into six angular sectors $\theta 1...\theta 6$, of the slopes of the control values from the derivatives $\dot{\phi}s$ and $\dot{C} em$,

- the value of these slopes is deduced if the latter have to be increased or reduced so as to minimize the difference between each control value and the corresponding reference value at the instant t(i)+T,

- and the point PK = Qi + 1 is determined corresponding to the configuration of the inverter (1) at the instant t(i)+T by means of the following truth table :

| Sign ($\Delta \dot{C}$ em) | + | - | + | - |
|---|---|---|---|---|
| Sign ($\Delta \dot{\phi}$ s) | + | + | - | - |
| $\theta(1)$ | P2 | P6 | P3 | P5 |
| $\theta(2)$ | P3 | P1 | P4 | P6 |
| $\theta(3)$ | P4 | P2 | P5 | P1 |
| $\theta(4)$ | P5 | P3 | P6 | P2 |
| $\theta(5)$ | P6 | P4 | P1 | P3 |
| $\theta(6)$ | P1 | P5 | P2 | P4 |

7. Method as claimed in claim 1 for controlling a switch (k) such as in particular a transistor, associated with a load RL such as in particular a two-level chopper, **characterized in that** at each sampling instant t(i) :

- the derivatives are calculated of the value I to be controlled at the instants t(i) and t(i)+T according to the state of the switch (k) at the instant t(i) according to the following formulae :

  . if the switch (k) is conducting at the instant t(i) :

$$\dot{i}(t(i)) = \frac{E - V}{L} \text{ and } \dot{i}(t(i) + T) = -\frac{V}{L}$$

  . if the switch (k) is non-conducting at the instant t(i):

$$\dot{i}(t(i)) = \frac{-V}{L} \text{ and } \dot{i}(t(i) + T) = \frac{E - V}{L}$$

- and a determination is made of the switching instant t(i)+tcom between t(i) and t(i)+T for changing the state of the switch (k) according to the formulae :

  . if the switch (k) is conducting at the instant t(i):

$$tcom = \frac{Iref - I(t(i))}{E/L} + T\frac{V}{E}$$

.   if the switch (k) is non-conducting at the instant t(i):

$$tcom = -\frac{Iref - I(t(i))}{E/L} + T\frac{E - V}{E}$$

**8.**   Device for controlling a static converter (1) associated with a polyphase current source (2) and a direct voltage source, said device being designed to make it possible to adjust an electrical and/or magnetic and/or mechanical value of the current source (2), a so-called control value, and being **characterized in that** it comprises:

-   a clock (7) with a period T capable of generating synchronization times t(i),

-   a computing module (4) capable of computing, at each instant t(i):

   .   from at least one measured value representing the state of the current source (2), at least one control value c(t) and its derivative $\dot{c}$ (t),

   .   from each control value c(t) and its derivative $\dot{c}$ (t), and by comparison with a preselected reference value, the configuration of the static converter (1) capable of leading to the minimization of the difference at the instant t(i)+T between each control value and the corresponding reference value,

   .   the variation of the derivative of one of the control values, the so-called preferred value, between the configurations of the static converter at the instant t(i) and t(i)+T respectively,

-   a unit (5) for computing the switching instant t(i)+tcom between t(i) and t(i)+T able to minimize the difference at the instant t(i)+T between the preferred control value and the associated reference value,

-   and a unit (6) for controlling the switching of the static converter at the instant t(i)+ tcom.

**9.**   Device as claimed in claim 8 for controlling an N-level inverter (1), with N≥2, associated with a triphase asynchronous machine (2), **characterized in that** the computing module (4) includes:

-   a module (4a) for estimating the values to be controlled of the torque Cem and flux φs and their derivatives $\dot{C}$em and $\dot{\phi}$s,

-   a computing module (4b) for determining the configuration of the inverter (1) at an instant t(1)+T as a function of its configuration at the instant T(i), associated with a truth table,

-   and a module (4c) for predicting the variation of the derivative of the torque $\Delta \dot{C}$em between the configurations at the instants t(i) and t(i)+T.

**10.**  Device as claimed in claim 9, **characterized in that** the truth table associated with the computing unit (4b) is as follows:

| Sign ($\Delta \dot{C}$ em) | + | - | + | - |
|---|---|---|---|---|
| Sign ($\Delta \dot{\phi}$s) | + | + | - | - |
| θ(1) | P2 | P6 | P3 | P5 |
| θ(2) | P3 | P1 | P4 | P6 |
| θ(3) | P4 | P2 | P5 | P1 |
| θ(4) | P5 | P3 | P6 | P2 |
| θ(5) | P6 | P4 | P1 | P3 |
| θ(6) | P1 | P5 | P2 | P4 |

Fig 1

EP 1 070 384 B1

Fig 2a

Fig 2b

Fig 2c

Fig 2d

Fig 2e

## Fig 3

## Fig 4

Fig 5

Fig 6

Fig 7a

Fig 7b

Fig 8

| Signe($\Delta$ Cem) | + | – | + | – |
|---|---|---|---|---|
| Signe($\Delta \phi_s'$) | + | + | – | – |
| $\theta(1)$ | P2 | P6 | P3 | P5 |
| $\theta(2)$ | P3 | P1 | P4 | P6 |
| $\theta(3)$ | P4 | P2 | P5 | P1 |
| $\theta(4)$ | P5 | P3 | P6 | P2 |
| $\theta(5)$ | P6 | P4 | P1 | P3 |
| $\theta(6)$ | P1 | P5 | P2 | P4 |

## Fig 9

## Fig 10